# EUROPEAN PATENT APPLICATION

(11) **EP 0 611 084 A1**
(43) Date of publication of application: **17.08.1994**
(21) Application number: 94300724.5
(22) Date of filing: 01.02.1994
(51) Int. Cl.: H01J 41/06, G01L 21/34

(54) **Magnetic structures**

(30) Priority: 10.02.1993 GB 9302587
(71) Applicant: The BOC Group plc, Windlesham Surrey GU20 6HJ (GB)
(72) Inventor: Lethbridge, Paul Graham, Dr., Lewes, East Sussex BN7 1YJ (GB)
(74) Representative: Bousfield, Roger James

(57) **Abstract**

A magnetic structure for use in vacuum gauges, which comprises a sheath of ferromagnetic material within which are held a first and a second magnetic array, each array:
- having a plurality of magnet components to form the complete array
- being magnetised such that the poles of the magnet components lie substantially on lines emanating radially from the magnetic structure main axis
- having a polarity opposite to the other array
- being longitudinally spaced apart from the other array.

## Description

This invention relates to magnetic structures and, more particularly to such structures in the form of hollow, bodies within which a substantially uniform, longitudinal magnetic field can be produced for use especially in a variety of vacuum gauges, for example in gauges of the cold cathode ionisation type which are sometimes referred to as "Penning" gauges.

In cold cathode ionisation gauges of the inverted magnetron type in particular, they generally comprise a rod-like anode surrounded by a substantially cylindrical cathode with a substantial magnetic field present between the anode and the cathode supplied by an external permanent magnet.

In use a large potential difference (several kilovolts) is applied between the anode and the cathode; gas molecules present in the gauge are ionised and the resulting ions and electrons are accelerated towards the cathode and anode respectively and may ionise other molecules by collision. In addition further free electrons are produced when the ions bombard the cathode.

The ion current found in this manner within the gauge is measured and is proportional to the pressure in the gauge.

It is important in such gauges for the magnetic field to be present running essentially parallel to the anode so that the electrons adopt a very long, non-linear trajectory, for example helical, before striking the anode; as such the probability of ionisation of gas molecules present in the vacuum to which the gauge is attached by collision with the electrons is greatly increased even at relatively low pressures.

The magnet field is commonly produced by providing a cylindrical magnet around the vacuum gauge anode and cathode with its polarity axially or longitudinally directed, ie. with a north pole at one end of the cylinder and a south pole at the other end. This generally provides the necessary axial or longitudinal magnetic field within gauge cathode but generally suffers from the disadvantage that magnetic field is also present externally of the gauge.

The present invention is concerned with the provision of a magnetic structure for use in such gauges in which such disadvantages are minimised.

In accordance with the invention, there is provided a magnetic structure for use in vacuum gauges, especially ones of the cold cathode ionisation type, which comprise a sheath of ferromagnetic material within which are held a first and a second magnetic array, each array:
- having a plurality of magnet components to form the complete array
- being magnetised such that the poles of the magnet components lie substantially on lines emanating radially from the magnetic structure main axis
- having a polarity opposite to the other array
- being longitudinally spaced apart from the other array.

The structure can generally have a variety of shapes depending on the gauge in to which it is to be incorporated. Whatever the shape, it is preferred for the cross sectional shape of the sheath and the magnetic arrays to conform such that the arrays can be tightly held within the interior of the sheath.

Preferably the overall cross-sectional shape of the sheath and of the arrays is circular or at least substantially circular. Other shapes, however, can be employed, for example square or rectangular or other polygonal shapes.

With regard to the magnetic arrays, it is important that the poles of the individual magnet components lie substantially on lines emanating radially from the magnetic structure main axis, ie. from the centre of the structure. This means that for one array the north pole is facing towards the centre of the structure and for the other array the north pole is facing away from the centre.

Thus, in the case of square arrays, there may be four magnet components for each array, ie. one for each side of the square, with the north and south poles being aligned on radial lines from the centre of the square but with the north and south poles of the first array facing in a different direction to those of the second array.

In the case of a substantially circular array, it is generally not possible to magnetise a complete circular ring of magnetisable material. However, the invention provides for such a circular magnetic array to be produced from a plurality of magnet components, for example from four to twenty components, which have been individually magnetised and then inserted into the sheath to form the array.

In general, the magnet components may be aligned in the array with each component positioned immediately adjacent another or, alternatively, spaces may be left between the individual components.

Overall, however, the shape of the body as a whole, ie. sheath plus arrays, should be hollow to allow the necessary magnetic field to be formed internally of the arrays.

The magnet components may be produced from any suitable ferromagnetic material, for example ones based on iron, nickel, cobalt and certain alloys thereof and also bonded ferrite. However it is much preferred to use isotropic materials such as bonded neodymium-boron-iron (Nd-B-Fe) or samarium-cobalt (Sm-Co).

For a better understanding of the invention, reference will now be made, by way of exemplification only, to the accompanying drawings, in which:

Figure 1 shows a magnetic structure of the invention in use with a cold cathode ionisation vacuum gauge.

Figure 2 shows a sectional view along the line II-II of Figure 1 of one of the magnetic arrays of the magnetic structure.

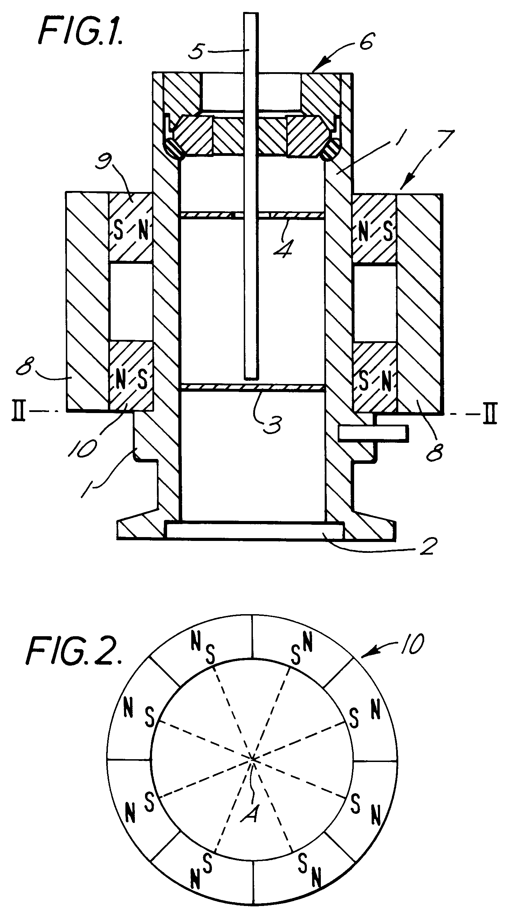

With reference to Figure 1, the vacuum gauge comprises a substantially cylindrical cathode in the form of a sleeve 1 having an inlet 2 at one end for communicating with a vacuum to be measured. Within the sleeve 1 are two apertured disc shaped components 3,4 defining a volume therebetween in which, in use of the gauge, the ionisation current is determined.

Within the sleeve 1 is an anode rod 5 which is held in position by a "feed through" generally shown at 6 and comprising a variety of seals (compression and otherwise) and thereby fully sealing that end of the sleeve 1.

The rod 5 passes through a central aperture in the disc shaped component 4 and in to the space formed between the components 3 and 4.

Surrounding the gauge and the sleeve 1 in particular is a magnetic structure generally inducted at 7 and comprising a cylindrical sheath 8 made of mild steel (Grade EN1A) within which are positioned a first and a second magnetic arrays 9 and 10 respectively. Each array comprises a plurality (10) of individual magnet components which are positioned and held in place adjacent each other and within the sleeve 1 with a suitable glue to form an annular array of a diameter conforming to the internal diameter of the sleeve 1 as shown more clearly in Figure 2 in respect of the array 10 in particular.

Each of the magnet components is manufactured from a bonded Nd-B-Fe material and magnetised and thereafter assembled within the sheath 8 to conform with the N/S polarities shown in Figure 1 and (for the array 10) in Figure 2.

It can be seen from Figure 2 in particular that the poles of the magnet components lie substantially on lines (shown dotted) emanating radially from the main axis A of the magnetic structure. It is also clear from figure 1 that the polarity of each array is opposite to the other array.

It is essential that each array is spaced from the other array although the extent of such spacing is not critical. Generally, a spacing of the longitudinal depth of the arrays has been found useful.

It has been found that the use of magnetic structures of the invention, in connection with vacuum gauges or otherwise, provides a magnetic field within the hollow structure which is axially orientated (generally parallel with the main axis) and, by virtue in particular of the ferrous sheath surrounding the magnetic arrays causes the field to occur substantially wholly within the structure with very little magnetic field outside the sheath.

Use of the vacuum gauge shown in the drawings is as described in the introduction above.

## Claims

1. A magnetic structure for use in vacuum gauges, which comprises a sheath of ferromagnetic material within which are held a first and a second magnetic array, each array:
- having a plurality of magnet components to form the complete array
- being magnetised such that the poles of the magnet components lie substantially on lines emanating radially from the magnetic structure main axis
- having a polarity opposite to the other array
- being longitudinally spaced apart from the other array.

2. A structure according to Claim 1 in which the overall cross-sectional shape of the sheath and of the arrays is substantially circular.

3. A structure according to Claim 2 in which each magnetic array is formed from between four and twenty components.

4. A structure according to any preceding claim in which each magnet component is positioned immediately adjacent another component.

5. A structure according to any one of Claims 1 to 4 in which spaces are left between the individual components of an array.

6. A structure according to any preceding claim in which the sheath plus arrays are hollow to allow the necessary magnetic field to be formed internally of the arrays.

7. A structure according to any preceding claim in which the magnet components are made from an isotropic material.

8. A structure according to Claim 7 in which the magnet components are made from a bonded neodymium-boron-iron (Nd-B-Fe) material.

9. A structure according to Claim 7 in which the magnet components are made from a bonded samarium-cobalt (Sm-Co) material.

10. A vacuum gauge of the cold cathode ionisation type including a magnetic structure in accordance with any one of Claims 1 to 9 inclusive.
